(19) Europäisches Patentamt / European Patent Office / Office européen des brevets

(11) **EP 4 481 627 A1**

(12) **EUROPEAN PATENT APPLICATION**

(43) Date of publication:
**25.12.2024 Bulletin 2024/52**

(21) Application number: **24172958.1**

(22) Date of filing: **29.04.2024**

(51) International Patent Classification (IPC):
**G06N 3/126** (2023.01)    **G06N 5/01** (2023.01)
**G06N 7/00** (2023.01)    **G06N 10/60** (2022.01)
**G06F 17/11** (2006.01)

(52) Cooperative Patent Classification (CPC):
**G06N 10/60; G06F 17/11; G06N 3/126; G06N 5/01;
G06N 7/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.06.2023 JP 2023100596**

(71) Applicant: **FUJITSU LIMITED
Kawasaki-shi, Kanagawa 211-8588 (JP)**

(72) Inventors:
• **KAKUKO, Norihiro
  Kawasaki-shi, Kanagawa, 211-8588 (JP)**
• **PARIZY, Matthieu
  Kawasaki-shi, Kanagawa, 211-8588 (JP)**

(74) Representative: **Hoffmann Eitle
Patent- und Rechtsanwälte PartmbB
Arabellastraße 30
81925 München (DE)**

(54) **PROGRAM, DATA PROCESSING METHOD, AND DATA PROCESSING APPARATUS**

(57)    A program causes a computer to execute a process including: calculating, when solution search using a first parameter value is executed based on an evaluation function, based on a first index value of a value of the evaluation function calculated by the evaluation function and a second index value of the value of the evaluation function obtained in a first period from a time point, which is after a start time point of a period of the solution search, to an end time point of the period of the solution search, a change rate that indicates a degree of a difference between the first index value and the second index value; and evaluating solution finding performance with the first parameter value for a problem represented by the evaluation function, based on the change rate.

FIG. 1

EP 4 481 627 A1

**Description**

FIELD

The embodiments discussed herein are related to a program, a data processing method, and a data processing apparatus.

BACKGROUND

As an example of solution finding to a combinatorial optimization problem using an evaluation function, an Ising machine may be used. The combinatorial optimization problem is converted into an energy function of an Ising model, which is a model representing a behavior of a spin of a magnetic body. The Ising machine searches for, for example, a combination that minimizes a value of the energy function among combinations of values of state variables included in the energy function. In this case, the combination of the values of the state variables that minimizes the value of the energy function corresponds to a ground state or an optimum solution.

Examples of a method of obtaining an approximate solution to the combinatorial optimization problem in a practical time include a simulated annealing (SA) method, a genetic algorithm (GA), a simulated quantum annealing (SQA) method, a tabu search method, and the like. Each of these methods uses a predetermined parameter to execute solution search.

For example, there is a proposal for an optimization apparatus that performs search for a ground state while gradually decreasing a value of a temperature parameter in the SA method.

There is a proposal for an optimization apparatus that executes solution search by the SA method by using input parameters including an initial value of thermal noise (temperature) and an attenuation rate of the thermal noise (temperature).

There is a proposal for a computing system that generates a set of parameters including a search period, a range, and a start point, based on features of a problem, for a solver that executes a heuristic algorithm for searching a solution space of the problem.

There is a proposal for a computer system that determines a set of annealing parameters for a problem by using a machine learning technique in a case where quantum annealing is performed.

There is a proposal for an optimization apparatus that performs a simulation by using a provisional optimum solution to a combinatorial optimization problem converted to an Ising model, updates the Ising model by adding a constraint term based on the result, and repeats search for the provisional optimum solution.

Japanese Laid-open Patent Publication Nos. 2020-194273 and 2021-43787, and U.S. Patent Application Publication Nos. 2011/0060710, 2021/0241143, and 2020/0380065 are disclosed as related art.

PROBLEMS

For solution finding to the combinatorial optimization problem, it is important to appropriately determine a parameter value to be used for the solution finding for the corresponding problem. Accordingly, a method for evaluating whether the parameter value is appropriate for the corresponding problem matters.

According to one aspect, an objective of the present disclosure is to efficiently perform evaluation of a parameter value.

SUMMARY

According to an aspect of the embodiments, a program causes a computer to execute a process including: calculating, when solution search using a first parameter value is executed based on an evaluation function, based on a first index value of a value of the evaluation function calculated by the evaluation function and a second index value of the value of the evaluation function obtained in a first period from a time point, which is after a start time point of a period of the solution search, to an end time point of the period of the solution search, a change rate that indicates a degree of a difference between the first index value and the second index value; and evaluating solution finding performance with the first parameter value for a problem represented by the evaluation function, based on the change rate.

[Effects of Invention]

According to one aspect, evaluation of a parameter value may be efficiently performed.

BRIEF DESCRIPTION OF DRAWINGS

FIG. 1 is a diagram for describing a data processing apparatus according to a first embodiment;
FIG. 2 is a diagram illustrating a hardware example of a data processing apparatus according to a second embodiment;
FIG. 3 is a diagram illustrating an example of functions of the data processing apparatus;
FIG. 4 is a diagram illustrating a first example of a relationship between a time and energy in solution search;
FIG. 5 is a diagram illustrating a second example of the relationship between the time and energy in the solution search;
FIG. 6 is a flowchart illustrating an example of processing of the data processing apparatus; and
FIG. 7 is a flowchart illustrating a comparative example.

DESCRIPTION OF EMBODIMENTS

Hereinafter, the present embodiments will be described with reference to the drawings.

[First Embodiment]

A first embodiment will be described.

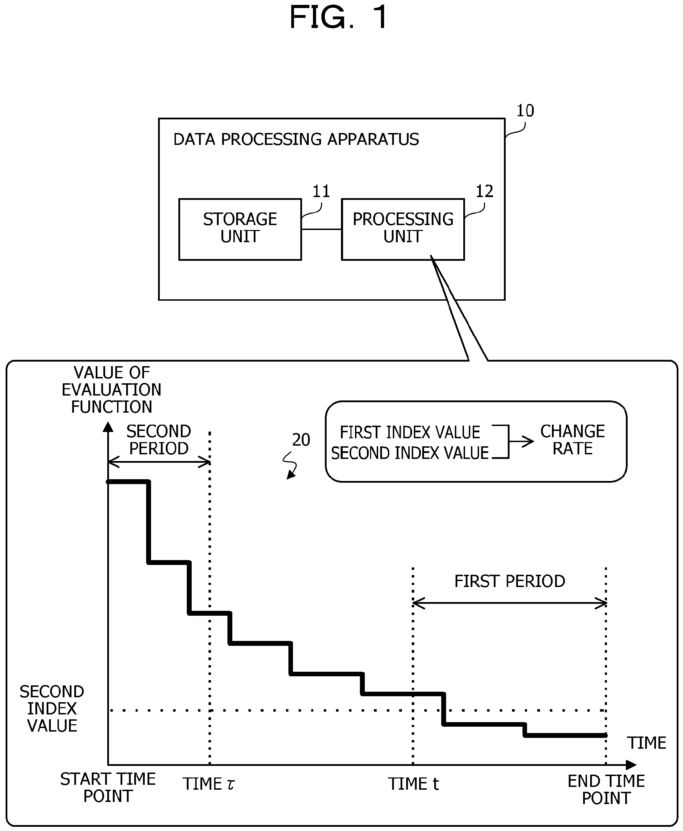

FIG. 1 is a diagram for describing a data processing apparatus of the first embodiment.
A data processing apparatus 10 is used for solution finding to a combinatorial optimization problem. The data processing apparatus 10 includes a storage unit 11 and a processing unit 12.
The storage unit 11 may be a volatile semiconductor memory such as a random-access memory (RAM) or a non-volatile storage such as a hard disk drive (HDD) or a flash memory. For example, the processing unit 12 is a processor such as a central processing unit (CPU), a graphics processing unit (GPU), or a digital signal processor (DSP). The processing unit 12 may include an application specific electronic circuit such as an application-specific integrated circuit (ASIC) or a field-programmable gate array (FPGA). The processing unit 12 may be a processor that executes a program stored in a memory such as a RAM (which may be the storage unit 11). A set of a plurality of processors may be referred to as a "multiprocessor" or simply a "processor".
An example in which the processing unit 12 searches for a solution will be described below. However, a search unit realized by an FPGA, a GPU, or the like may search for a solution in accordance with an instruction from the processing unit 12, and may return a search result to the processing unit 12. In such a case, the search unit may be included in the data processing apparatus 10 or may be included in another apparatus that communicates with the data processing apparatus 10.
The combinatorial optimization problem is formulated by a predetermined evaluation function and is replaced with, for example, a problem that minimizes a value of the evaluation function, for example, an evaluation value. The evaluation function may be referred to as an objective function, or may be referred to as an energy function in a case where the evaluation function represents energy. The evaluation function includes a plurality of state variables. The state variable is a binary variable that takes a value of 0 or 1. The state variable may also be referred to as a bit. A solution to the combinatorial optimization problem is represented by values of the plurality of state variables. As an example of the evaluation function, an energy function of an Ising model is presented. The solution that minimizes the value of the energy function represents a ground state of the Ising model, and corresponds to an optimum solution to the combinatorial optimization problem. The value of the energy function is referred to as energy. The energy is an example of a value of the evaluation function, for example, an evaluation value. For this reason, the "energy function" in the following description may be read as "an evaluation function". The "energy" in the following description may be read as "a value of an evaluation function" or "an evaluation value".
An Ising-type energy function is represented by Equation (1).

$$E(\boldsymbol{x}) = -\sum_{\langle i,j \rangle} W_{ij} x_i x_j - \sum_i b_i x_i \qquad (1)$$

A state vector x has a plurality of state variables as elements, and represents a state of the Ising model. Equation (1) is an energy function formulated in a quadratic unconstrained binary optimization (QUBO) form. In a case of a problem of maximizing energy, the sign of the energy function may be reversed.
A first term on the right side of Equation (1) is obtained by integrating a product of values of two state variables and a weight coefficient for all combinations of the two state variables that are selectable from all state variables without omission and duplication. Subscripts i and j are indices of the state variables. $x_i$ is an i-th state variable. $x_j$ is a j-th state variable. $W_{ij}$ is a weight between the i-th state variable and the j-th state variable or a weight coefficient indicating a strength of coupling. $W_{ij} = W_{ji}$ and $W_{ii} = 0$ are satisfied.

A second term on the right side of Equation (1) is a sum of products of a bias of each of all the state variables and a value of the state variable. $b_i$ indicates a bias for the i-th state variable. Problem information including a weight coefficient, a bias, and the like included in the energy function is stored in the storage unit 11. An energy change amount $\Delta E_i$ due to a change in the state variable $x_i$ is represented by Equation (2).

$$\Delta E_i = (2x_i - 1)\left(\sum_j W_{ij}x_j + b_i\right) \qquad (2)$$

When the state variable $x_i$ satisfying $\Delta E_i > 0$ changes, energy E(x) in Equation (1) decreases. The processing unit 12 calculates a change amount of the value of the energy function due to a change in a value of one state variable among the plurality of state variables, for each of the plurality of state variables, and stochastically preferentially accepts the change in which the value of the energy function decreases.

At this time, in a case of falling into a local solution, it is impossible to escape from the local solution with a steepest descent method. Accordingly, the processing unit 12 uses a Metropolis method or a Gibbs method to determine a probability of transition from a certain state to a next state due to changing of a certain state variable. For example, the processing unit 12 also stochastically accepts a change that increases the value of the energy function, in accordance with comparison between the change amount in the value of the energy function and a thermal noise value. The thermal noise value is obtained based on a temperature value or a random number. As the temperature value increases, an amplitude of the thermal noise value increases. As the amplitude of the thermal noise value increases, the state transition with a large increase amount of the value of the energy function is likely to be accepted.

For example, in the SA method, the processing unit 12 gradually changes the temperature value from a maximum temperature value to a minimum temperature value to decrease the amplitude of the thermal noise value, and causes the state of the Ising model to converge to a ground state. As described above, in the SA method, parameters such as the maximum temperature value and the minimum temperature value are used.

For this reason, the processing unit 12 acquires a parameter value of a general-purpose, for example, a general-purpose parameter value in advance based on solution finding results of the SA method or the like for a plurality of existing training problems, and uses the general-purpose parameter value in solution finding to a new problem. A training problem is a problem prepared for training for the general-purpose parameter value. For acquiring the general-purpose parameter value, the processing unit 12 executes, for example, the SA method or the like using each of a plurality of candidate values of a parameter for a predetermined time, and performs evaluation of the candidate values based on energy obtained as a result of the executing. The processing unit 12 selects a candidate value with the best evaluation as the general-purpose parameter value, and stores the selected candidate value in the storage unit 11. Note that the general-purpose parameter value is not necessarily useful for all the problems.

Accordingly, the processing unit 12 performs evaluation of solution finding performance by the SA method or the like in a case where the general-purpose parameter value is used for a new problem, for example, an evaluation problem. Based on the evaluation result, the processing unit 12 determines whether to acquire a parameter value specialized for the evaluation problem, for example, a specialized parameter value. For example, the processing unit 12 executes the following processing. Although the general-purpose parameter value is exemplified below as a parameter value to be evaluated for the solution finding performance, the parameter value to be evaluated is not limited to the general-purpose parameter value and may be arbitrary parameter value.

First, when solution search based on an energy function corresponding to the evaluation problem is executed by using a general-purpose parameter value, the processing unit 12 acquires energy history information obtained by the solution search. A graph 20 is an example in which the energy history information that is a value of the evaluation function obtained by this solution search is graphed. A horizontal axis of the graph 20 indicates a time. A vertical axis of the graph 20 indicates a value of the evaluation function, which is energy in this example. The horizontal axis of the graph 20 indicates a start time point of the solution search and an end time point of the solution search.

The processing unit 12 acquires a first index value of energy calculated by the energy function of the evaluation problem. The processing unit 12 acquires a second index value of energy obtained in a first period from a time point, which is after the start time point of the period of the solution search, to the end time point of the period of the solution search. For example, the first period is a period from a time t to the end time point. For example, the first period is a second half n% portion of the entire period from the start time point to the end time point of the solution search.

For example, the processing unit 12 uses a median value of energies obtained in the first period as the second index value. However, the processing unit 12 may use another statistical value such as an average value or a minimum value of energies obtained in the first period as the second index value.

Examples of the first index value include the following.

According to a first example, the processing unit 12 acquires, as the first index value, a median value of energies obtained in a second period, which is earlier than the first period, with the start time point of the solution search as a starting point. For example, the second period is a period from the start time point of the solution search to a time $\tau$. The time $\tau$ is a time earlier than the time t. For example, the second period is a first half m% portion of the entire period of the solution search. $m \leq n$ is satisfied. This is because energy variation in the first half of the solution search is larger than that in the second half.

According to a second example, the processing unit 12 uses, as the first index value, energy of an initial solution used in the solution search based on the energy function of the evaluation problem.

According to a third example, the processing unit 12 uses, as the first index value, energy of a predetermined solution calculated in advance for the energy function of the evaluation problem. For example, the energy of the predetermined solution is energy of an optimum solution theoretically predicted. However, the energy of the predetermined solution may be energy of arbitrary solution other than the optimum solution, such as a local solution.

Based on the first index value and the second index value, the processing unit 12 calculates a change rate that indicates a degree of a difference between the first index value and the second index value. For example, the processing unit 12 may calculate a ratio of the difference between the first index value and the second index value to the first index value as the change rate. For example, the processing unit 12 may calculate the change rate by dividing the difference between the first index value and the second index value by the first index value. The difference between the first index value and the second index value may be an absolute value of a value obtained by subtracting the second index value from the first index value. In a case where the energy of the predetermined solution is used as the first index value, the change rate may also be referred to as a difference rate.

Based on the change rate, the processing unit 12 evaluates the solution finding performance with the general-purpose parameter value for the evaluation problem. For example, the processing unit 12 evaluates this solution finding performance in accordance with a comparison between the change rate and a predetermined reference value. For example, the processing unit 12 evaluates that the solution finding performance is insufficient in a case where the change rate is less than the reference value. In a case where the change rate is equal to or greater than the reference value, the processing unit 12 evaluates that the solution finding performance is sufficient.

Solution finding performance being insufficient means that the general-purpose parameter value is not appropriate for the evaluation problem. Accordingly, in a case where the solution finding performance is insufficient, the processing unit 12 determines to acquire a specialized parameter value specialized for the evaluation problem. Solution finding performance being sufficient means that the general-purpose parameter value is appropriate for the evaluation problem. Accordingly, in a case where solution finding performance is sufficient, the processing unit 12 determines not to acquire this specialized parameter value.

The reference value is determined in advance. The reference value may be designated in advance by a user. Alternatively, the processing unit 12 may acquire a history of energies obtained by the solution search performed for acquiring the general-purpose parameter value for each of a plurality of training problems, and calculate a reference value based on this acquired history of the energies. For example, the processing unit 12 may obtain the same change rate as described above for each training problem based on the history of energies obtained by the solution search to each training problem with the general-purpose parameter value, and may use a median value of the change rates for each training problem as the reference value. At the time of comparison with the change rate, the processing unit 12 may multiply this reference value by a variable d (d < 1) to set a level of performance to be accepted.

When it is determined that the specialized parameter value is not to be acquired, the processing unit 12 outputs a first solution obtained by the solution search using the general-purpose parameter value. Solution finding to the evaluation problem ends.

By contrast, when it is determined to acquire the specialized parameter value, the processing unit 12 performs solution search using each of a plurality of parameter candidate values, and acquires a specialized parameter value based on the result of executing the solution search for each of the plurality of parameter candidate values.

A time for the solution search using each of the plurality of parameter candidate values may be made shorter than a time for the solution search using the specialized parameter value. For example, the processing unit 12 may select, as the specialized parameter value, a parameter candidate value that reaches a lowest energy as a result of solution search for a certain time using each of the plurality of parameter candidate values. Alternatively, the processing unit 12 may evaluate the parameter candidate value higher as it reaches lower energy in a shorter time, and select the parameter candidate value with the highest evaluation as the specialized parameter value.

The processing unit 12 executes solution search using the specialized parameter value, and outputs a second solution obtained by the solution search using the specialized parameter value. Solution finding to the evaluation problem ends.

As described above, according to the data processing apparatus 10, the solution search using the first parameter value is executed based on the evaluation function. The first index value of the value of the evaluation function calculated by the evaluation function is acquired. The second index value of the value of the evaluation function obtained in the first period from the time point, which is after the start time point of the period of the solution search, to the end time point of the period of the solution search is acquired. Based on the first index value and the second index value, a change rate that indicates a degree of a difference between the first index value and the second index value is calculated. Solution finding performance with the first parameter value for the problem represented by this evaluation function is evaluated based on the change rate.

Accordingly, the data processing apparatus 10 may efficiently evaluate the parameter value. The processing unit 12 may output an evaluation result of the solution finding performance with the first parameter value for the corresponding problem. For example, as a result, the data processing apparatus 10 may support the user to confirm whether the first parameter value is appropriate for the corresponding problem. The general-purpose parameter value described above is an example of the first parameter value.

In the solution finding to the combinatorial optimization problem, there is a case where a parameter value of a general-purpose, for example, a general-purpose parameter value is acquired in advance based on an execution result of solution search for an existing problem, and the general-purpose parameter value is used for solution finding to a new problem. However, the general-purpose parameter value is not necessarily useful for all the problems. Depending on the problem, sufficient solution finding performance may not be obtained with the general-purpose parameter value. By contrast, it is also conceivable to acquire, for each problem, a parameter value appropriate for this problem. However, in the acquisition of the parameter value, for example, processing such as execution of the solution search for a predetermined time using each of a plurality of candidate values of the parameter and evaluation of each candidate value based on the execution result is performed. For this reason, it is inefficient to acquire, every time a new problem appears, the parameter value for this problem.

By using the general-purpose parameter value as the first parameter value to be evaluated, the data processing apparatus 10 may efficiently execute the solution finding as follows.

For example, in a case where it is evaluated that the solution finding performance in a case of using the general-purpose parameter value is sufficient based on the change rate, the data processing apparatus 10 may adopt the solution searched by using the general-purpose parameter value as a solution to the corresponding problem as it is, and may omit the acquisition of the specialized parameter value.

The data processing apparatus 10 may narrow down the problem for which the specialized parameter value is acquired to a case where solution finding performance in the case of using the general-purpose parameter value is evaluated to be insufficient. For this reason, the data processing apparatus 10 does not have to acquire a specialized parameter value for each problem. In a case where solution finding performance is insufficient with the general-purpose parameter value, the data processing apparatus 10 acquires a specialized parameter value, so that it is possible to perform the solution search using the specialized parameter value instead of the general-purpose parameter value, and to improve the solution finding performance for the corresponding problem.

[Second Embodiment]

Next, a second embodiment will be described.

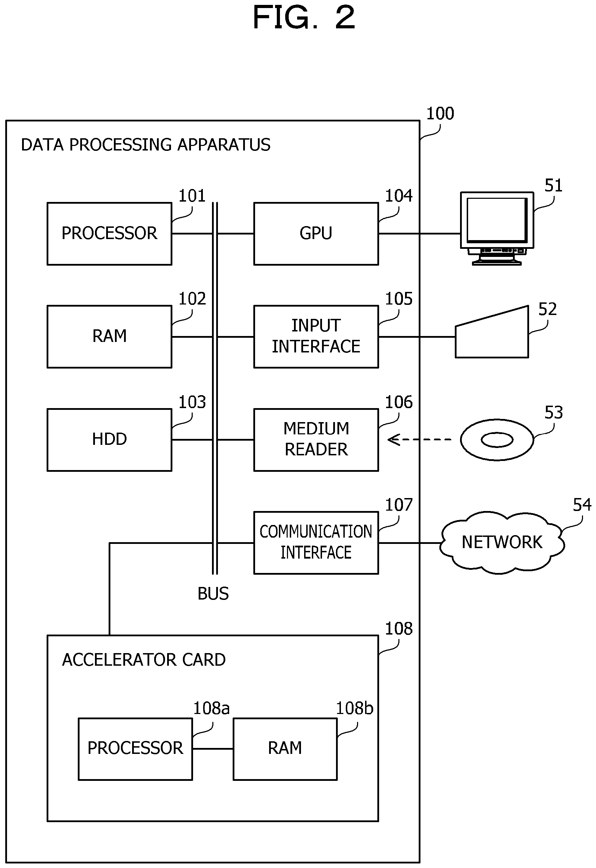

FIG. 2 is a diagram illustrating a hardware example of a data processing apparatus according to the second embodiment.

A data processing apparatus 100 performs solution finding to a combinatorial optimization problem. The combinatorial optimization problem is formulated by an energy function of Equation (1). By executing the SA method or the like based on the energy function, the data processing apparatus 100 searches for a solution corresponding to the combinatorial optimization problem.

The data processing apparatus 100 includes a processor 101, a RAM 102, an HDD 103, a GPU 104, an input interface 105, a medium reader 106, a communication interface 107, and an accelerator card 108. These units included in the data processing apparatus 100 are coupled to a bus inside the data processing apparatus 100. The processor 101 corresponds to the processing unit 12 in the first embodiment. The RAM 102 or the HDD 103 corresponds to the storage unit 11 in the first embodiment.

The processor 101 is an arithmetic apparatus that executes instructions of a program. For example, the processor 101 is a CPU. The processor 101 loads at least a part of a program or data stored in the HDD 103 into the RAM 102, and executes the program. The processor 101 may include a plurality of processor cores. The data processing apparatus 100 may have a plurality of processors. The processing to be described below may be executed in parallel by using a plurality of processors or processor cores. A set of the plurality of processors may be referred to as a "multiprocessor" or simply referred to as a "processor".

The RAM 102 is a volatile semiconductor memory that temporarily stores the program to be executed by the processor 101 and data to be used for the arithmetic operation by the processor 101. The data processing apparatus 100 may include a memory of a type other than the RAM and may include a plurality of memories.

The HDD 103 is a non-volatile storage device that stores data and programs of software such as an operating system (OS), middleware, and application software. The data processing apparatus 100 may include other types of storage devices such as a flash memory or a solid-state drive (SSD), and may include a plurality of non-volatile storage devices.

The GPU 104 outputs an image to a display 51 coupled to the data processing apparatus 100 in accordance with an instruction from the processor 101. As the display 51, arbitrary type of display such as a cathode ray tube (CRT) display, a liquid crystal display (LCD), a plasma display, or an organic electro-luminescence (OEL) display may be used.

The input interface 105 acquires an input signal from an input device 52 coupled to the data processing apparatus 100, and outputs the input signal to the processor 101. As the input device 52, a pointing device such as a mouse, a touch panel, a touchpad, or a trackball, a keyboard, a remote controller, a button switch, or the like may be used. A plurality of types of input devices may be coupled to the data processing apparatus 100.

The medium reader 106 is a reading apparatus that reads a program and data recorded in a recording medium 53. As the recording medium 53, for example, a magnetic disk, an optical disk, a magneto-optical (MO) disk, a semiconductor memory, or the like may be used. The magnetic disk includes a flexible disk (FD) and an HDD. The optical disk includes a compact disc (CD) and a Digital Versatile Disc (DVD).

For example, the medium reader 106 copies a program or data read from the recording medium 53 into another recording medium such as the RAM 102 or the HDD 103. For example, the read program is executed by the processor 101. The recording medium 53 may be a portable-type recording medium, and may be used to distribute a program and data. The recording medium 53 and the HDD 103 may be referred to as a computer-readable recording medium.

The communication interface 107 is coupled to a network 54, and communicates with another information processing apparatus via the network 54. The communication interface 107 may be a wired communication interface coupled to a wired communication apparatus such as a switch or a router, or may be a wireless communication interface coupled to a wireless communication apparatus such as a base station or an access point.

The accelerator card 108 is a hardware accelerator that executes the SA method based on an energy function of an Ising model. The accelerator card 108 may perform solution search using an algorithm other than the SA method. The accelerator card 108 includes a processor 108a and a RAM 108b. For example, the processor 108a is a CPU, a GPU, an FPGA, an ASIC, or the like. According to an instruction from the processor 101, the processor 108a executes the SA method and returns a solution obtained by the search. The RAM 108b is a memory that stores data to be used for processing by the processor 108a. For example, values of parameters such as a maximum temperature value and a minimum temperature value are used to execute the SA method. The values of these parameters are input to the accelerator card 108 by the processor 101 and held in the RAM 108b.

An apparatus that performs solution finding to a problem represented by an Ising-type energy function, for example, an Ising problem like the accelerator card 108 or the data processing apparatus 100 is referred to as an Ising machine.

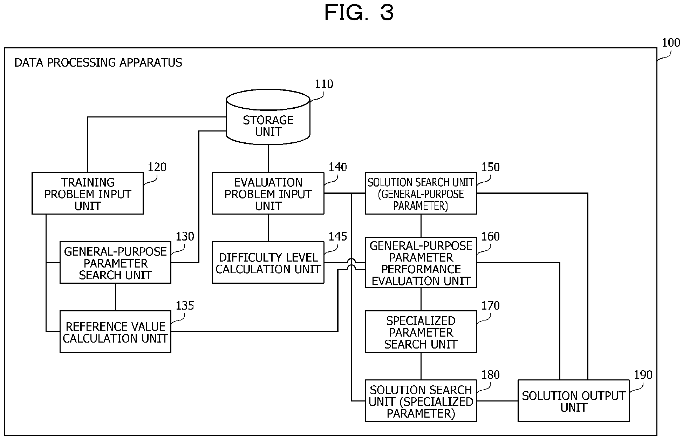

FIG. 3 is a diagram illustrating an example of the functions of the data processing apparatus.

The data processing apparatus 100 includes a storage unit 110, a training problem input unit 120, a general-purpose parameter search unit 130, a reference value calculation unit 135, an evaluation problem input unit 140, a difficulty level calculation unit 145, solution search units 150 and 180, a general-purpose parameter performance evaluation unit 160, a specialized parameter search unit 170, and a solution output unit 190.

A storage region of the RAM 102 or the HDD 103 is used for the storage unit 110. A program stored in the RAM 102 is executed by the processor 101, so that the training problem input unit 120, the general-purpose parameter search unit 130, the reference value calculation unit 135, the evaluation problem input unit 140, the difficulty level calculation unit 145, the solution search units 150 and 180, the general-purpose parameter performance evaluation unit 160, the specialized parameter search unit 170, and the solution output unit 190 are realized.

The storage unit 110 stores data of a training problem and an evaluation problem. The training problem is a combinatorial optimization problem used for general-purpose parameter search. A plurality of training problems are prepared in advance. The evaluation problem is a combinatorial optimization problem that the user wants to solve.

The training problem input unit 120 acquires data of the training problem stored in the storage unit 110, and inputs the data to the general-purpose parameter search unit 130 and the reference value calculation unit 135. The data of the training problem may include information such as an Ising-type energy function indicating the training problem and an initial solution used for solution search.

The general-purpose parameter search unit 130 performs general-purpose parameter search. The general-purpose parameter search is processing of acquiring a general-purpose parameter value by using a training problem. According to the SA method, the general-purpose parameter value to be acquired is, for example, both or one of a maximum temperature value and a minimum temperature value. In a case where there are a plurality of types of parameters such as the maximum temperature and the minimum temperature, the general-purpose parameter value to be acquired is a set of values of these parameters. The same applies to the specialized parameter value described below.

First, the general-purpose parameter search unit 130 acquires a plurality of candidate values of the corresponding parameter. For example, the general-purpose parameter search unit 130 may acquire the plurality of candidate values in a round-robin manner by a grid search from a predetermined candidate value range. Alternatively, the general-purpose parameter search unit 130 may randomly acquire the plurality of candidate values from a predetermined candidate value range by random search.

The general-purpose parameter search unit 130 inputs the candidate values of the parameter and data of the training problem to the accelerator card 108, causes the accelerator card 108 to execute solution search for a certain time, and obtains an energy update history in the solution search. For a plurality of training problems, the general-purpose parameter search unit 130 acquires reached energy and a time when this energy is reached for each candidate value, and evaluates each candidate value such that the evaluation becomes higher as it reaches lower energy in a shorter time. The general-purpose parameter search unit 130 selects a candidate value having a highest evaluation as the general-purpose parameter value, and stores the selected general-purpose parameter value in the storage unit 110.

Based on the energy update history in the solution search acquired in the general-purpose parameter search, the reference value calculation unit 135 calculates a reference value. The reference value calculation is processing of obtaining a reference value for measuring solution finding performance of solution search in a case where a general-purpose parameter value is used for an evaluation problem. The reference value calculation unit 135 inputs the calculated reference value to the general-purpose parameter performance evaluation unit 160.

The evaluation problem input unit 140 acquires data of the evaluation problem and the general-purpose parameter value stored in the storage unit 110, and inputs the data and the general-purpose parameter value to the solution search unit 150. The data of the evaluation problem may include information such as an Ising-type energy function indicating the evaluation problem and an initial solution used for solution search. The evaluation problem input unit 140 inputs information on a number of state variables (number of bits) in the evaluation problem, a type of a constraint, and a number of constraints to the difficulty level calculation unit 145. The evaluation problem input unit 140 inputs energy of a theoretical solution to the evaluation problem to the general-purpose parameter performance evaluation unit 160.

In a case where it is determined to perform specialized parameter search, based on the performance evaluation by the general-purpose parameter performance evaluation unit 160, the evaluation problem input unit 140 inputs the data of the evaluation problem to the specialized parameter search unit 170 and the solution search unit 180.

Based on the number of bits in the evaluation problem, the type of a constraint, and the number of constraints, the difficulty level calculation unit 145 calculates a difficulty level of the evaluation problem. The constraint is represented as a constraint term in the Ising-type energy function. The number of constraints corresponds to the number of constraint terms representing the corresponding type of constraint. Examples of the type of the constraint include a 1 way 1 hot constraint, a 2 way 1 hot constraint, and so on.

For example, the difficulty level calculation unit 145 sets the difficulty level of the problem higher as the number of bits or the number of constraints of the evaluation problem is larger. As an example, in a case where there are two types of constraints, such as a constraint 1 and a constraint 2, the difficulty level calculation unit 145 may calculate the difficulty level of the problem by Equation (3) below.

$$\text{Difficulty level of problem} = b1 \times (\text{number of bits of evaluation problem}) + b2 \times (\text{number of constraints 1}) + b3 \times (\text{number of constraints 2}) \quad (3)$$

Alternatively, the difficulty level calculation unit 145 may calculate the difficulty level of the problem by using Equation (4) below.

$$\text{Difficulty level of problem} = b \times (\text{number of bits of evaluation problem}) + (\text{number of constraints 1}) \times (\text{number of constraints 2}) \quad (4)$$

$b1$, $b2$, and $b3$ in Equation (3) and $b$ in Equation (4) are coefficients given in advance. $b1$, $b2$, $b3$, and $b$ are positive real numbers.

Alternatively, a table representing a correspondence relationship of difficulty levels with respect to a set of the number of bits in a problem, the number of constraints 1, and the number of constraints 2 may be stored in the storage unit 110 in advance. For example, this table holds patterns such as a pattern in which the difficulty level of the problem is set to $v$ in a case where the number of bits is equal to or less than $c1$, the number of constraints 1 is equal to or less than $c2$, and the number of constraints 2 is equal to or less than $c3$. In this case, the difficulty level calculation unit 145 may search this table for a pattern that satisfies the conditions of the number of bits of the evaluation problem, the number of constraints 1, and the number of constraints 2, and may acquire the difficulty level of the evaluation problem.

EP 4 481 627 A1

The difficulty level calculation unit 145 inputs the difficulty level of the evaluation problem to the general-purpose parameter performance evaluation unit 160.

The solution search unit 150 inputs the data of the evaluation problem and the general-purpose parameter value to the accelerator card 108, and causes the accelerator card 108 to execute solution search with respect to the evaluation problem. The solution search unit 150 acquires an energy update history in this solution search and a searched solution from the accelerator card 108. The solution search unit 150 outputs the energy update history to the general-purpose parameter performance evaluation unit 160.

The general-purpose parameter performance evaluation unit 160 performs general-purpose parameter performance evaluation. The general-purpose parameter performance evaluation is processing of evaluating solution finding performance of solution search in a case where a general-purpose parameter value is used.

First, the general-purpose parameter performance evaluation unit 160 acquires a first index value of energy calculated by the energy function of the evaluation problem. Based on the energy update history, the general-purpose parameter performance evaluation unit 160 acquires a second index value of energy obtained in the first period from the time point, which is after the start time point of the period of the solution search, to the end time point of the period of the solution search. Next, the general-purpose parameter performance evaluation unit 160 calculates a change rate that indicates a degree of a difference between the first index value and the second index value. According to the comparison between the change rate and the reference value calculated by the reference value calculation unit 135, the general-purpose parameter performance evaluation unit 160 determines whether the solution finding performance in the case of using the general-purpose parameter value is sufficient for the evaluation problem.

In a case where it is determined that the solution finding performance is sufficient, the general-purpose parameter performance evaluation unit 160 outputs this determination result to the solution output unit 190. In a case where it is determined that the solution finding performance is insufficient, the general-purpose parameter performance evaluation unit 160 instructs the specialized parameter search unit 170 to execute specialized parameter search.

The specialized parameter search unit 170 performs specialized parameter search. The specialized parameter search is processing of acquiring a specialized parameter value for an evaluation problem. The specialized parameter search unit 170 inputs candidate values of the specialized parameter and data of the evaluation problem to the accelerator card 108, causes the accelerator card 108 to execute solution search for a certain time, and obtains an energy update history in the solution search. For each of the plurality of candidate values, the specialized parameter search unit 170 causes the accelerator card 108 to execute solution search with respect to the evaluation problem. The specialized parameter search unit 170 acquires reached energy and a time when this energy is reached for each candidate value, and evaluates each candidate value such that the evaluation becomes higher as it reaches lower energy in a shorter time. The specialized parameter search unit 170 selects a candidate value having the highest evaluation as the specialized parameter value, and outputs it to the solution search unit 180.

The solution search unit 180 inputs the data of the evaluation problem and the specialized parameter value to the accelerator card 108, and causes the accelerator card 108 to execute solution search with respect to the evaluation problem. The solution search unit 180 acquires a solution searched by this solution search from the accelerator card 108. The solution search unit 180 outputs the acquired solution to the solution output unit 190.

In a case where the general-purpose parameter performance evaluation unit 160 determines that solution finding performance with the general-purpose parameter value is sufficient, the solution output unit 190 acquires a solution from the solution search unit 150 and outputs this solution. In a case where it is determined that the solution finding performance with the general-purpose parameter value is insufficient, the solution output unit 190 acquires a solution from the solution search unit 180 and outputs this solution.

For example, the solution output unit 190 may cause the display 51 to display an image representing the solution to the evaluation problem, or may transmit data on the solution to another computer via the network 54.

Although the general-purpose parameter search unit 130, the solution search units 150 and 180, and the specialized parameter search unit 170 cause the accelerator card 108 to execute solution search, this function of the solution search may be realized by the processor 101 executing a program. In this case, the data processing apparatus 100 may not include the accelerator card 108.

An example of an energy update history obtained by solution search with respect to an evaluation problem will be described.

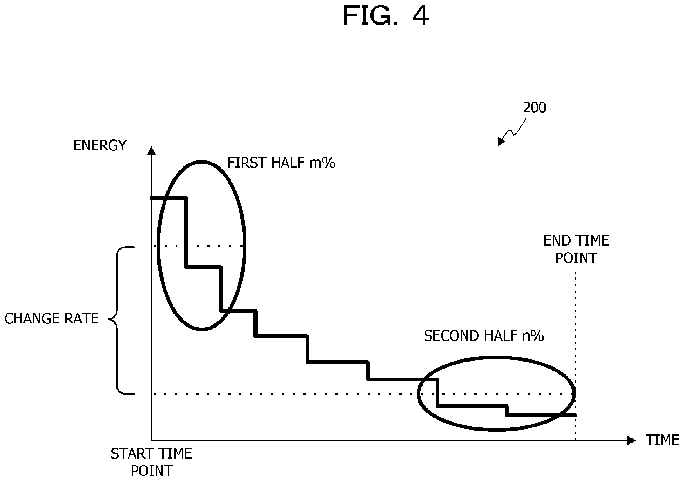

FIG. 4 is a diagram illustrating a first example of a relationship between a time and energy in the solution search.

A graph 200 illustrates a relationship between a time and energy indicated in the energy update history. A horizontal axis of the graph 200 indicates a time. A vertical axis of the graph 200 indicates reached energy by the solution search. For example, a time of the solution search, for example, a time from a start time point to an end time point of the solution search is designated in advance.

For example, the general-purpose parameter performance evaluation unit 160 evaluates that sufficient solution finding performance is not obtained when a change rate of energy calculated by Equation (5) below from energies of a first half m% and a second half n% of the energy update history is less than a reference value. $m \leq n$ is satisfied.

9

Change rate of energy = (median value of energies of first half m% - median value of energies of second half n%) / (median value of energies of first half m%)

(5)

However, in a case where an initial solution of the solution search is obtained by preprocessing using another solution search method or the like, the general-purpose parameter performance evaluation unit 160 may use Equation (6) below.

Change rate of energy = (energy of initial solution - median value of energies of second hald n%) / (energy of initial solution)

(6)

In a case where energy of a theoretical solution is known in advance, the general-purpose parameter performance evaluation unit 160 may use a difference rate represented by Equation (7) below as the change rate.

Difference rate of energy = (energy of theoretical solution - median value of energies of second half n%) / energy of theoretical solution

(7)

The energy of the theoretical solution may be energy of a local solution, energy of an optimum solution, or energy of a solution other than these.

The reference value is calculated in advance by the reference value calculation unit 135 based on the energy update history of the general-purpose parameter search using the training problem by using Equation similar to the change rate or the difference rate used by the general-purpose parameter performance evaluation unit 160. For example, the reference value calculation unit 135 may obtain the same change rate as described above for each training problem based on the history of energies obtained by the solution search for each training problem with the general-purpose parameter value, and may use a median value of the change rates for each training problem as the reference value.

At the time of comparison with the change rate, the general-purpose parameter performance evaluation unit 160 may multiply this reference value by a variable d (d < 1) to set a level of performance to be accepted.

The general-purpose parameter performance evaluation unit 160 may also perform evaluation of the solution finding performance for the general-purpose parameter value based on the difficulty level of the evaluation problem. An evaluation example of the solution finding performance using the difficulty level of the evaluation problem will be described next.

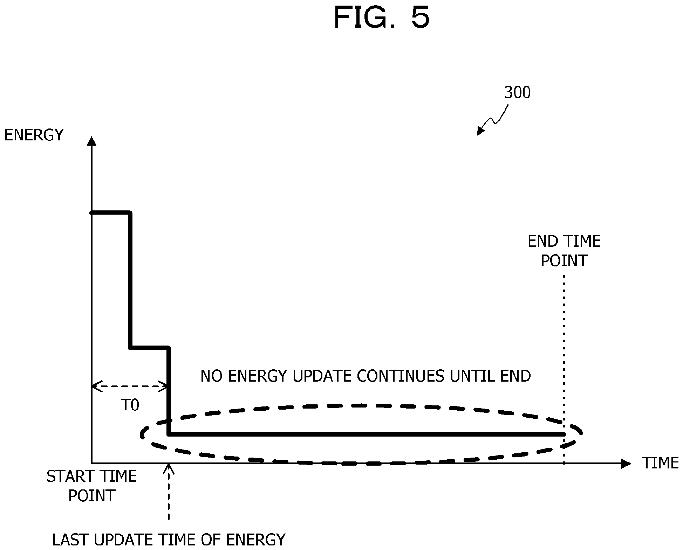

FIG. 5 is a diagram illustrating a second example of the relationship between a time and energy in the solution search.

A graph 300 illustrates a relationship between a time and energy indicated in the energy update history. A horizontal axis of the graph 300 indicates a time. A vertical axis of the graph 300 indicates reached energy by the solution search. Based on the energy update history, the general-purpose parameter performance evaluation unit 160 obtains a time T0 from a start time point of the solution search to a last update time of energy.

In a case where the time T0 is short with respect to the difficulty level of the evaluation problem, the general-purpose parameter performance evaluation unit 160 may evaluate that solution finding performance is sufficient. For example, in a case where the time T0 < a × (difficulty level of problem) is satisfied, the general-purpose parameter performance evaluation unit 160 may evaluate that the solution finding performance is sufficient. "a" is a coefficient given in advance. "a" is a positive real number. In this case, the general-purpose parameter performance evaluation unit 160 evaluates that solution finding performance is insufficient in a case of the time T0 ≥ a × (difficulty level of problem).

In a case where it is not determined that solution finding performance is sufficient by the comparison between the change rate and the reference value, the general-purpose parameter performance evaluation unit 160 may perform evaluation of the solution finding performance based on the comparison between the difficulty level of the problem and the time T0. Alternatively, in a case where it is not determined that solution finding performance is sufficient by the comparison between the difficulty level of the problem and the time T0, the general-purpose parameter performance evaluation unit 160 may perform evaluation of the solution finding performance based on the comparison between the change rate and the reference value.

Next, a procedure of the processing of the data processing apparatus 100 will be described.

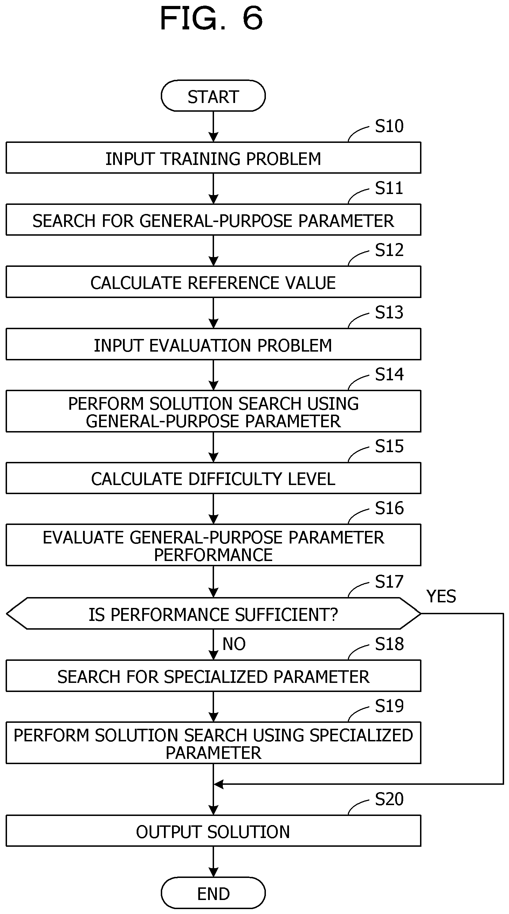

FIG. 6 is a flowchart illustrating an example of processing of the data processing apparatus.

(S10) The training problem input unit 120 acquires data of a training problem from the storage unit 110 and inputs the data to the general-purpose parameter search unit 130.

(S11) The general-purpose parameter search unit 130 performs general-purpose parameter search. For example, the general-purpose parameter search unit 130 inputs candidate values of the general-purpose parameter and the data of the training problem to the accelerator card 108, causes the accelerator card 108 to execute the solution search for a certain time, and obtains an energy update history in the solution search. For a plurality of training problems, the general-purpose parameter search unit 130 acquires reached energy and a time when this energy is reached for each candidate value, and evaluates each candidate value such that the evaluation becomes higher as it reaches lower energy in a shorter time. The general-purpose parameter search unit 130 selects a candidate value having a highest evaluation as the general-purpose parameter value, and stores the selected general-purpose parameter value in the storage unit 110.

(S12) The reference value calculation unit 135 calculates a reference value based on the energy update history in the solution search acquired in the general-purpose parameter search, and stores this reference value in the storage unit 110. The reference value is used for evaluation of solution finding performance in the general-purpose parameter performance evaluation unit 160.

(S13) The evaluation problem input unit 140 acquires data of an evaluation problem and the general-purpose parameter value from the storage unit 110, and inputs the data and the general-purpose parameter value to the solution search unit 150. The evaluation problem input unit 140 inputs the data of the evaluation problem to the difficulty level calculation unit 145.

(S14) The solution search unit 150 inputs the data of the evaluation problem and the general-purpose parameter value to the accelerator card 108, and causes the accelerator card 108 to execute solution search with respect to the evaluation problem. The solution search unit 150 acquires an energy update history in this solution search and a searched solution from the accelerator card 108.

(S15) The difficulty level calculation unit 145 calculates a difficulty level of the evaluation problem based on the data of the evaluation problem. The difficulty level is used for evaluation of solution finding performance in the general-purpose parameter performance evaluation unit 160. For example, either Equation (3) or (4) is used to calculate the difficulty level. However, Equations (3) and (4) may be changed in accordance with the number of constraint terms for each type of a constraint.

(S16) The general-purpose parameter performance evaluation unit 160 performs general-purpose parameter performance evaluation. In the general-purpose parameter performance evaluation, the general-purpose parameter performance evaluation unit 160 acquires a first index value of energy calculated by the energy function of the evaluation problem. Based on the energy update history, the general-purpose parameter performance evaluation unit 160 acquires a second index value of energy obtained in the first period from the time point, which is after the start time point of the period of the solution search, to the end time point of the period of the solution search. The general-purpose parameter performance evaluation unit 160 calculates a change rate by dividing a difference between the first index value and the second index value by the first index value. For example, any one of Equations (5), (6), and (7) is used to calculate the change rate.

By comparing the change rate with the reference value calculated by the reference value calculation unit 135, the general-purpose parameter performance evaluation unit 160 evaluates whether the solution finding performance is sufficient. For example, the general-purpose parameter performance evaluation unit 160 evaluates that the solution finding performance is sufficient in a case where the change rate is equal to or greater than the reference value, and does not evaluate that the solution finding performance is sufficient in a case where the change rate is less than the reference value.

In a case where the solution finding performance is not evaluated to be sufficient by this comparison, the general-purpose parameter performance evaluation unit 160 evaluates the solution finding performance based on the comparison between the difficulty level of the problem and the time T0 described above. For example, in a case where the time $T0 < a \times$ (difficulty level of problem) is satisfied, the general-purpose parameter performance evaluation unit 160 evaluates that the solution finding performance is sufficient. In a case of the time $T0 \geq a \times$ (difficulty level of problem), the general-purpose parameter performance evaluation unit 160 evaluates that the solution finding performance is insufficient.

(S17) The general-purpose parameter performance evaluation unit 160 determines whether it is evaluated that sufficient performance is obtained by at least one of the method of evaluating the solution finding performance by comparing the change rate with the reference value and the method of evaluating the solution finding performance by comparing the difficulty level of the problem with the time T0. In a case where it is evaluated that sufficient performance is obtained by at least one of the methods, the processing proceeds to step S20. In a case where it is not evaluated that sufficient performance is obtained by any of the methods, the processing proceeds to step S18.

(S18) The specialized parameter search unit 170 performs specialized parameter search. The specialized parameter search unit 170 inputs candidate values of the specialized parameter and data of the evaluation problem to the accelerator card 108, causes the accelerator card 108 to execute solution search for a certain time, and obtains an energy update history in the solution search. For each of the plurality of candidate values, the specialized parameter search unit 170 causes the accelerator card 108 to execute solution search with respect to the evaluation problem. The specialized parameter search unit 170 acquires reached energy and a time when this energy is reached for each candidate value, and evaluates each candidate value such that the evaluation becomes higher as it reaches lower energy in a shorter time. The specialized parameter search unit 170 selects a candidate value having the highest evaluation as the specialized parameter value.

(S19) The solution search unit 180 inputs the data of the evaluation problem and the specialized parameter value to the accelerator card 108 and causes the accelerator card 108 to execute solution search with respect to the evaluation problem. The solution search unit 180 acquires a solution searched by this solution search from the accelerator card 108.

(S20) The solution output unit 190 outputs the solution acquired by the solution search unit 150 or the solution acquired by the solution search unit 180 as a final solution with respect to the evaluation problem. The processing of the data processing apparatus 100 ends.

As described above, the general-purpose parameter performance evaluation unit 160 determines whether to perform the specialized parameter search for the corresponding evaluation problem based on the evaluation of the solution finding performance by comparing the change rate with the reference value. In step S16, the general-purpose parameter performance evaluation unit 160 may not evaluate the solution finding performance based on the difficulty level of the evaluation problem. In this case, in step S17, in a case where the change rate is equal to or greater than the reference value, the general-purpose parameter performance evaluation unit 160 evaluates that the solution finding performance is sufficient, for example, sufficient performance is obtained. By contrast, in a case where the change rate is less than the reference value, the general-purpose parameter performance evaluation unit 160 evaluates that the solution finding performance is insufficient, for example, sufficient performance is not obtained.

Next, a comparative example will be described. The comparative example is a case where the functions of the reference value calculation unit 135, the difficulty level calculation unit 145, the general-purpose parameter performance evaluation unit 160, the specialized parameter search unit 170, the solution search unit 180, and the solution output unit 190 are not used.

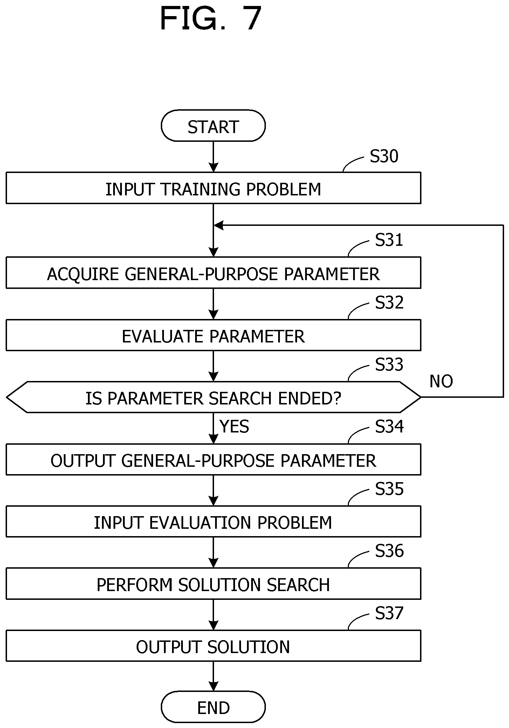

FIG. 7 is a flowchart illustrating the comparative example.

(S30) The training problem input unit 120 inputs data of a training problem to the general-purpose parameter search unit 130.

(S31) The general-purpose parameter search unit 130 acquires a general-purpose parameter. Processing similar to the above-described general-purpose parameter search is performed in the general-purpose parameter acquisition. However, in step S31, the general-purpose parameter search unit 130 executes solution search for a certain time using the accelerator card 108 with respect to one candidate value of a target parameter.

(S32) The general-purpose parameter search unit 130 acquires an energy update history from the accelerator card 108, and evaluates the candidate value of the parameter based on the energy update history.

(S33) The general-purpose parameter search unit 130 determines whether to end the parameter search, for example, the repetition of the processing in steps S31 and S32. In a case where the parameter search is ended, the processing proceeds to step S34. In a case where the parameter search is not ended, the processing proceeds to step S31. For example, when evaluation for all the candidate values is completed using all the training problems, the general-purpose parameter search unit 130 determines to end the parameter search. Otherwise, the general-purpose parameter search unit 130 determines that the parameter search is not to be ended, and proceeds to step S31 to perform processing on a combination of an unexecuted training problem and a candidate value.

(S34) The general-purpose parameter search unit 130 outputs the general-purpose parameter value.

(S35) The evaluation problem input unit 140 inputs data of an evaluation problem and the general-purpose parameter value to the solution search unit 150.

(S36) The solution search unit 150 inputs the data of the evaluation problem and the general-purpose parameter value to the accelerator card 108, and causes the accelerator card 108 to execute solution search with respect to the evaluation problem. The solution search unit 150 acquires the obtained solution from the accelerator card 108.

(S37) The solution search unit 150 outputs the acquired solution. The processing of the comparative example ends.

As in the method of the comparative example, it is also conceivable to use a general-purpose parameter value for all evaluation problems. However, the general-purpose parameter value is not necessarily appropriate for all the evaluation problems. For example, the following experiment has been performed.

Solution finding to all 134 problems of a standard benchmark "QAP-LIB" for which a solution is known was performed in the experiment. R.E. Burkard, S.E. Karisch, and F. Rendl, "Qaplib - a quadratic assignment problem library", Journal of Global Optimization, vol. 10, no. 4, pp. 391-403, 1997 serves as a reference of the QAP-LIB.

By using 10 problems in the QAP-LIB as training problems, general-purpose parameter values were acquired by 1000 times of general-purpose parameter searches in one search time of 30 seconds. The solution search was performed in an evaluation time of 60 seconds for all the 134 problems by using the general-purpose parameter values, and performance evaluation was performed based on a change rate of obtained energy.

As a result, a gap to the solution for 125 problems for which the performance was determined to be sufficient was 0.047%, and a reaching rate to the solution was 93.6% (117/125). By contrast, the gap to the solution for 9 problems for which the performance was determined to be insufficient was 0.303%, and the reaching rate to the solution was 33.3% (3/9), which is poor. According to this experiment, it has been confirmed that whether the solution finding performance is sufficient may be correctly determined based on the change rate.

According to the method of the comparative example, there is a possibility that an appropriate solution may not be obtained for some problems as described above. Accordingly, specialized parameter search for 300 seconds (30 seconds × 10 times) was performed for each of the 9 problems whose performance was determined to be insufficient, and the solution search was performed with the specialized parameter values obtained by the specialized parameter searches. As a result, for the these 9 problems, the gap to the solution was improved to 0.216%, and the reaching rate to the solution was improved to 77.8% (7/9). For example, in Tai80a, which is one of the 9 problems, the reached energy in the evaluation time of 60 seconds by using the specialized parameter value was not reached by using the general-purpose parameter value even after one hour.

As described above, the data processing apparatus 100 uses a change rate or a difference rate of energy for the evaluation of the solution finding performance. Each of these change rate and difference rate may be easily acquired from the energy update history in the solution search. For this reason, the data processing apparatus 100 may efficiently evaluate the solution finding performance with the corresponding parameter value for the evaluation problem.

By performing the performance evaluation using the change rate or the difference rate of energy or the difficulty level, the data processing apparatus 100 performs the specialized parameter search by narrowing down to the problem for which the performance with the general-purpose parameter value is insufficient, so that it is possible to reduce the execution time of the solution finding. In this manner, the data processing apparatus 100 may efficiently execute the solution finding.

As described above, the data processing apparatus 100 executes, for example, the following processing.

Based on the evaluation function, the accelerator card 108 executes solution search using a first parameter value. This solution search may be executed by the processor 101. The processor 101 acquires a first index value of a value of an evaluation function calculated by this evaluation function. The processor 101 acquires a second index value of the value of the evaluation function obtained in a first period from a time point, which is after a start time point of a period of this solution search, to an end time point of the period of the solution search. Based on the first index value and the second index value, the processor 101 calculates a change rate that indicates a degree of a difference between the first index value and the second index value. Based on the change rate, the processor 101 evaluates solution finding performance with the first parameter value for the problem (evaluation problem) represented by the corresponding evaluation function.

Accordingly, the data processing apparatus 100 may efficiently perform evaluation of the parameter value. In a case where there are a plurality of types of parameters used for the solution search, the first parameter value is a set of values of the plurality of types of parameters. For example, in a case where the solution search is performed by the SA method, the first parameter value may be one or both of a maximum temperature value and a minimum temperature value. In a case where the solution search is performed by a method other than the SA method, the first parameter value may be a parameter value of a type other than the maximum temperature value and the minimum temperature value.

By using a plurality of reference values, the general-purpose parameter performance evaluation unit 160 may perform evaluation of the solution finding performance in multiple stages of three or more stages in accordance with the comparison between the change rate and each of the plurality of reference values. For example, the general-purpose parameter performance evaluation unit 160 may perform evaluation of the solution finding performance by using a first reference value and a second reference value larger than the first reference value. For example, in a case where the change rate is larger than the second reference value, the general-purpose parameter performance evaluation unit 160 may evaluate that the solution finding performance is higher than standard solution finding performance. In a case where the change rate is equal to or greater than the first reference value and less than the second reference value, the general-purpose parameter performance evaluation unit 160 may evaluate that the solution finding performance is the standard solution finding performance. In a case where the change rate is less than the first reference value, the general-purpose parameter performance evaluation unit 160 may evaluate that the solution finding performance is lower than the standard solution finding performance. By outputting such an evaluation result, the general-purpose parameter performance evaluation unit 160 may support the user to confirm the evaluation result of the solution finding performance with the first parameter value.

For example, the evaluation function may be an energy function of the Ising model. The evaluation function may be another type of function used for problem representation.

For example, the processor 101 calculates the change rate by dividing a difference between the first index value and the second index value by the first index value. Accordingly, the data processing apparatus 100 may easily acquire the change rate.

The processor 101 may acquire a median value of the values of the evaluation function obtained in the first period as the second index value. Accordingly, the data processing apparatus 100 may easily acquire the second index value. However, the second index value may be another statistical value such as an average value, a minimum value, or a percentile value of the values of the evaluation function obtained in the first period.

The processor 101 may acquire, as the first index value, a median value of values of the evaluation function obtained in a second period, which is earlier than the first period, with the start time point of the solution search as a starting point. Accordingly, the data processing apparatus 100 may easily acquire the first index value.

The processor 101 may acquire, as the first index value, a value of the evaluation function that corresponds to an initial solution in the solution search with respect to the evaluation problem. Accordingly, the data processing apparatus 100 may easily acquire the first index value.

The processor 101 may acquire, as the first index value, a value of the evaluation function that corresponds to a predetermined solution calculated in advance with respect to the evaluation function. Accordingly, the data processing apparatus 100 may easily acquire the first index value. This predetermined solution may be a local solution, an optimum solution, or arbitrary solution other than these.

For example, the processor 101 compares the change rate with a predetermined reference value in the evaluation of the solution finding performance. In a case where the change rate is less than the reference value, the processor 101 determines that the solution finding performance is insufficient. By contrast, in a case where the change rate is equal to or greater than the reference value, the processor 101 determines that the solution finding performance is sufficient. Accordingly, the data processing apparatus 100 may efficiently perform evaluation of the parameter value. The reference value may be designated in advance by a user. As described above, when comparing the change rate with the reference value, the processor 101 may compare a value obtained by multiplying the reference value by a variable value (coefficient value) less than 1, with the change rate.

The processor 101 may calculate the change rate by dividing an absolute value of a difference between the first index value and the second index value by the first index value. In this case, in a case where the value of the evaluation function corresponding to an optimum solution is used as the first index value, the processor 101 may evaluate the solution finding performance as follows. For example, the processor 101 may determine that the solution finding performance is insufficient in a case where the change rate is larger than the reference value. By contrast, the processor 101 may determine that the solution finding performance is sufficient in a case where the change rate is equal to or smaller than the reference value.

The first parameter value may be a general-purpose parameter value that is used for a plurality of problems in a general-purpose manner. In this case, in a case where the solution finding performance is insufficient, the processor 101 determines to acquire a second parameter value (specialized parameter value) specialized for the evaluation problem. In a case where the solution finding performance is sufficient, the processor 101 determines that the second parameter value is not to be acquired. Accordingly, the data processing apparatus 100 may narrow down the problem for which the second parameter value is to be acquired. As a result, the data processing apparatus 100 may efficiently execute the solution finding. The second parameter value is a parameter value of the same type as that of the first parameter value. In a case where there are a plurality of types of parameters used for the solution search, the second parameter value is a set of values of these plurality of types of parameters.

For each of a plurality of training problems, the processor 101 may acquire a history of values of the evaluation function obtained by the solution search performed for acquiring the first parameter value, and calculate a reference value based on the acquired history of values of this evaluation function. Accordingly, the data processing apparatus 100 may omit work of designating the reference value by the user. By automatically setting the reference value in the data processing apparatus 100, the user no longer has to have knowledge about the problem, and the solution finding function by the data processing apparatus 100 may be easily used by the user.

When it is determined that the second parameter value is not to be acquired, the processor 101 outputs a first solution obtained by the solution search using the first parameter value. By contrast, when it is determined that the second parameter value is to be acquired, the processor 101 performs solution search using each of the plurality of parameter candidate values, and acquires the second parameter value based on the result of executing the solution search for each of the plurality of parameter candidate values. The processor 101 performs solution search using the second parameter value, and outputs a second solution obtained by the solution search using the second parameter value.

Accordingly, for the problem for which the second parameter value may not be acquired, the data processing apparatus 100 may omit the acquisition of the second parameter value and efficiently obtain the first solution. For the problem for which the second parameter value is to be acquired, the data processing apparatus 100 may efficiently obtain the second solution more appropriate than the first solution for this problem. As described above, the processor 101 may perform the solution search by using the search unit such as the accelerator card 108.

The processor 101 may evaluate the solution finding performance with the first parameter value for this problem based on the difficulty level of this problem (evaluation problem) and the time T0 from the start time point of the period of the solution search to the time at which the value of the evaluation function is last updated. Accordingly, the data processing apparatus 100 may more appropriately perform evaluation of the parameter value.

For example, the processor 101 may calculate the difficulty level of this problem based on the number of state variables included in the evaluation function corresponding to this problem and the number of constraint terms representing the constraint. Accordingly, the data processing apparatus 100 may efficiently calculate the difficulty level of the problem. For example, the processor 101 sets the difficulty level higher as the number of state variables is larger. The processor 101 sets the difficulty level higher as the number of the constraint terms is larger.

The information processing according to the first embodiment may be realized by causing the processing unit 12 to execute a program. The information processing according to the second embodiment may be realized by causing the processor 101 to execute a program. The program may be recorded in the computer-readable recording medium 53.

For example, the program may be circulated by distributing the recording medium 53 in which the program is recorded. The program may be stored in another computer and the program may be distributed via a network. For example, a computer may store (install) the program recorded in the recording medium 53 or the program received from the another computer in a storage device such as the RAM 102 or the HDD 103, read the program from this storage device, and execute the program.

**Claims**

1. A program for causing a computer to execute a process comprising:

    calculating, when solution search using a first parameter value is executed based on an evaluation function, based on a first index value of a value of the evaluation function calculated by the evaluation function and a second index value of the value of the evaluation function obtained in a first period from a time point, which is after a start time point of a period of the solution search, to an end time point of the period of the solution search, a change rate that indicates a degree of a difference between the first index value and the second index value; and
    evaluating solution finding performance with the first parameter value for a problem represented by the evaluation function, based on the change rate.

2. The program according to claim 1,
    wherein the evaluation function is an energy function of an Ising model.

3. The program according to claim 1, further causing the computer to execute a process of:
    calculating the change rate by dividing the difference between the first index value and the second index value by the first index value, in the calculating of the change rate.

4. The program according to claim 1, further causing the computer to execute a process of:
    acquiring, as the second index value, a median value of values of the evaluation function obtained in the first period.

5. The program according to claim 1, further causing the computer to execute a process of:
    acquiring, as the first index value, a median value of values of the evaluation function obtained in a second period, which is earlier than the first period, with the start time point as a starting point.

6. The program according to claim 1,
    wherein the first index value is a value of the evaluation function that corresponds to an initial solution in the solution search.

7. The program according to claim 1,
    wherein the first index value is a value of the evaluation function that corresponds to a predetermined solution calculated in advance for the evaluation function.

8. The program according to claim 1, further causing the computer to execute a process of:
    in the evaluating the solution finding performance, comparing the change rate with a predetermined reference value, and in a case where the change rate is less than the reference value, determining that the solution finding performance is insufficient, and in a case where the change rate is equal to or greater than the reference value, determining that the solution finding performance is sufficient.

9. The program according to claim 8,

    wherein the first parameter value is a general-purpose parameter value that is used for a plurality of problems in a general-purpose manner, and
    wherein the program further causes the computer to execute a process of:
    determining that a second parameter value specialized for the problem is to be acquired in a case where the solution finding performance is insufficient, and determining that the second parameter value is not to be acquired in a case where the solution finding performance is sufficient.

10. The program according to claim 9, further causing the computer to execute a process of:

acquiring a history of values of the evaluation function obtained by the solution search performed for acquiring the first parameter value for each of a plurality of training problems, and calculating the reference value based on the acquired history of the values of the evaluation function.

11. The program according to claim 9, further causing the computer to execute a process of:

outputting a first solution obtained by the solution search using the first parameter value when it is determined that the second parameter value is not to be acquired; and

when it is determined to acquire the second parameter value, performing the solution search using each of a plurality of parameter candidate values, acquiring the second parameter value based on an execution result of the solution search for each of the plurality of parameter candidate values, performing the solution search using the second parameter value, and outputting a second solution obtained by the solution search using the second parameter value.

12. The program according to claim 1, further causing the computer to execute a process of:
evaluating solution finding performance with the first parameter value for the problem based on a difficulty level of the problem and a time from the start time point to a time at which the value of the evaluation function is last updated in the solution search.

13. The program according to claim 12, further causing the computer to execute a process of:
calculating the difficulty level based on a number of state variables included in the evaluation function and a number of constraint terms that represent a constraint.

14. A data processing method comprising:

calculating, when solution search using a first parameter value is executed based on an evaluation function, based on a first index value of a value of the evaluation function calculated by the evaluation function and a second index value of the value of the evaluation function obtained in a first period from a time point, which is after a start time point of a period of the solution search, to an end time point of the period of the solution search, a change rate that indicates a degree of a difference between the first index value and the second index value; and

evaluating solution finding performance with the first parameter value for a problem represented by the evaluation function, based on the change rate.

15. A data processing apparatus comprising:

a storage unit configured to store a first parameter value which is used for a solution search; and

a processing unit configured to calculate, when the solution search using the first parameter value is executed based on the evaluation function, based on a first index value of a value of the evaluation function calculated by the evaluation function and a second index value of the value of the evaluation function obtained in a first period from a time point, which is after a start time point of a period of the solution search, to an end time point of the period of the solution search, a change rate that indicates a degree of a difference between the first index value and the second index value and evaluate solution finding performance with the first parameter value for a problem represented by the evaluation function, based on the change rate.

# FIG. 1

# FIG. 2

DATA PROCESSING APPARATUS 100

PROCESSOR 101

RAM 102

HDD 103

GPU 104

INPUT INTERFACE 105

MEDIUM READER 106

COMMUNICATION INTERFACE 107

BUS

ACCELERATOR CARD 108

PROCESSOR 108a

RAM 108b

51

52

53

NETWORK 54

# FIG. 3

DATA PROCESSING APPARATUS — 100

STORAGE UNIT — 110

TRAINING PROBLEM INPUT UNIT — 120

EVALUATION PROBLEM INPUT UNIT — 140

SOLUTION SEARCH UNIT (GENERAL-PURPOSE PARAMETER) — 150

GENERAL-PURPOSE PARAMETER SEARCH UNIT — 130

DIFFICULTY LEVEL CALCULATION UNIT — 145

GENERAL-PURPOSE PARAMETER PERFORMANCE EVALUATION UNIT — 160

REFERENCE VALUE CALCULATION UNIT — 135

SPECIALIZED PARAMETER SEARCH UNIT — 170

SOLUTION SEARCH UNIT (SPECIALIZED PARAMETER) — 180

SOLUTION OUTPUT UNIT — 190

# FIG. 4

# FIG. 5

300

ENERGY

END TIME
POINT

NO ENERGY UPDATE CONTINUES UNTIL END

T0

TIME

START TIME
POINT

LAST UPDATE TIME OF ENERGY

# FIG. 6

START

S10
INPUT TRAINING PROBLEM

S11
SEARCH FOR GENERAL-PURPOSE PARAMETER

S12
CALCULATE REFERENCE VALUE

S13
INPUT EVALUATION PROBLEM

S14
PERFORM SOLUTION SEARCH USING GENERAL-PURPOSE PARAMETER

S15
CALCULATE DIFFICULTY LEVEL

S16
EVALUATE GENERAL-PURPOSE PARAMETER PERFORMANCE

S17
IS PERFORMANCE SUFFICIENT? — YES

NO

S18
SEARCH FOR SPECIALIZED PARAMETER

S19
PERFORM SOLUTION SEARCH USING SPECIALIZED PARAMETER

S20
OUTPUT SOLUTION

END

# FIG. 7

```
                    ┌──────────────┐
                    │    START     │
                    └──────┬───────┘
                           │                      S30
                           ▼
        ┌──────────────────────────────────────┐
        │        INPUT TRAINING PROBLEM         │
        └──────────────────┬───────────────────┘
                           │◄──────────────────────────┐
                           │                      S31   │
                           ▼                            │
        ┌──────────────────────────────────────┐       │
        │      ACQUIRE GENERAL-PURPOSE PARAMETER│       │
        └──────────────────┬───────────────────┘       │
                           │                      S32   │
                           ▼                            │
        ┌──────────────────────────────────────┐       │
        │           EVALUATE PARAMETER          │       │
        └──────────────────┬───────────────────┘       │
                           │                      S33   │ NO
                           ▼                            │
        ◄──────────────────────────────────────────────┘
              IS PARAMETER SEARCH ENDED?
                           │ YES                  S34
                           ▼
        ┌──────────────────────────────────────┐
        │     OUTPUT GENERAL-PURPOSE PARAMETER  │
        └──────────────────┬───────────────────┘
                           │                      S35
                           ▼
        ┌──────────────────────────────────────┐
        │        INPUT EVALUATION PROBLEM       │
        └──────────────────┬───────────────────┘
                           │                      S36
                           ▼
        ┌──────────────────────────────────────┐
        │        PERFORM SOLUTION SEARCH        │
        └──────────────────┬───────────────────┘
                           │                      S37
                           ▼
        ┌──────────────────────────────────────┐
        │            OUTPUT SOLUTION            │
        └──────────────────┬───────────────────┘
                           │
                           ▼
                    ┌──────────────┐
                    │     END      │
                    └──────────────┘
```

Europäisches
Patentamt

European
Patent Office

Office européen
des brevets

# EUROPEAN SEARCH REPORT

Application Number

EP 24 17 2958

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 187 447 A1 (FUJITSU LTD [JP]) 31 May 2023 (2023-05-31) * paragraph [0079] - paragraph [0102]; figures 3,5 * | 1-15 | INV. G06N3/126 G06N5/01 G06N7/00 G06N10/60 G06F17/11 |
| | ----- | | |

TECHNICAL FIELDS
SEARCHED       (IPC)

G06N
G06F

The present search report has been drawn up for all claims

| Place of search | Date of completion of the search | Examiner |
|---|---|---|
| The Hague | 25 October 2024 | Keane, Shane |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 17 2958

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2024

| Patent document cited in search report | Publication date | Patent family member(s) | Publication date |
|---|---|---|---|
| EP 4187447 A1 | 31-05-2023 | CN 116186343 A | 30-05-2023 |
| | | EP 4187447 A1 | 31-05-2023 |
| | | JP 2023079015 A | 07-06-2023 |
| | | US 2023169386 A1 | 01-06-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020194273 A
- JP 2021043787 A
- US 20110060710
- US 20210241143 A
- US 20200380065 A

**Non-patent literature cited in the description**

- **R.E. BURKARD** ; **S.E. KARISCH** ; **F. RENDL**. Qaplib - a quadratic assignment problem library. *Journal of Global Optimization*, 1997, vol. 10 (4), 391-403